# EUROPÄISCHE PATENTSCHRIFT

(11) **EP 3 372 442 B1**
(45) Veröffentlichungstag und Bekanntmachung des Hinweises auf die Patenterteilung: **04.10.2023**
(21) Anmeldenummer: 18158508.4
(22) Anmeldetag: 26.02.2018
(51) Int. Cl.: B60L 53/14, B60L 53/18, B60L 53/30, B60L 53/65, B60L 53/66, B60L 53/68, G05B 9/02, G06Q 50/06, H02J 7/00

(54) **LADESTATION UND BETRIEBSVERFAHREN HIERFÜR**
CHARGING POINT AND OPERATING METHOD FOR SAME
STATION DE CHARGEMENT ET PROCÉDÉ DE FONCTIONNEMENT CORRESPONDANT

(30) Priorität: 09.03.2017 DE 102017105014
(43) Veröffentlichungstag der Anmeldung: 12.09.2018
(73) Patentinhaber: Compleo Charging Solutions AG, 44309 Dortmund (DE)
(72) Erfinder: Kachouh, Checrallah, 44227 Dortmund (DE)
(74) Vertreter: Wickord, Wiro

(56) Entgegenhaltungen:
- EP-A1- 2 579 417
- EP-A1- 3 093 184
- DE-A1-102010 016 751
- DE-A1-102010 019 376
- DE-A1-102011 113 354
- DE-A1-102012 004 542
- DE-A1-102012 011 773
- DE-U1-202008 014 766
- DE-U1-202008 014 768
- DE-U1-202014 104 920
- US-A1- 2012 217 928
- US-A1- 2012 278 215
- US-A1- 2014 365 065
- Ptb: "Anforderungen an elektronische und software-gesteuerte Messgeräte und Zusatzeinrichtungen für Elektrizität, Gas, Wasser und Wärme", , 30 April 2002 (2002-04-30), XP055680110, Retrieved from the Internet: URL:https://www.ptb.de/cms/fileadmin/inter net/fachabteilungen/abteilung_2/2.3_elektr ische_energiemesstechnik/2.34/download_234 /ptb-a50_7-1.pdf [retrieved on 2020-03-26]

## Beschreibung

Die Erfindung betrifft eine Ladestation nach dem Oberbegriff des Patentanspruchs 1.

Ferner betrifft die Erfindung ein Betriebsverfahren für eine der Bereitstellung elektrischer Energie dienenden Ladestation und insbesondere ein Betriebsverfahren für eine gattungsgemäße beziehungsweise erfindungsgemäße Ladestation.

Gattungsgemäße Ladestationen für Elektrofahrzeuge werden wahlweise im privaten Bereich oder im öffentlichen Raum aufgestellt und betrieben. Im privaten Bereich ist die Abrechnung eines Ladevorgangs regelmäßig einfach. Typischerweise erfolgt die Abrechnung unmittelbar über den privaten Energieversorger, der eine vertragliche Verbindung mit dem Nutzer hat. Im öffentlichen Bereich stellt die Abrechnung des Ladevorgangs den Betreiber der Ladestation vor das Problem, den Vorgaben des Mess- und Eichgesetzes gerecht zu werden. Problematisch ist dies insbesondere, da die Ladestationen im öffentlichen Bereich durch eine Vielzahl unterschiedlicher Nutzer verwendet werden und diese Nutzer mithin keine feste vertragliche Bindung zum Betreiber der Ladestation haben. Eine 1:1-Beziehung zwischen dem Nutzer und einem Energiezähler der Ladestation liegt im öffentlichen Raum - anders als im privaten Bereich - daher typischerweise nicht vor. Häufig ist es vielmehr so, dass die verschiedenen Nutzer eine vertragliche Verbindung zu einem Dienstleister, dem sogenannten Mobility Service Provider haben und dieser Dienstleister die Ladevorgänge seiner verschiedenen Kunden gegenüber dem Betreiber der Ladestation abrechnet.

Beispielsweise zeigt die DE 10 2010 016 751 A1 eine gattungsgemäße Ladestation. Es ist dabei eine Verschlüsselungseinheit vorgesehen zum Verschlüsseln von in einem Steuergerät während des Ladens erzeugten Daten.

Überdies erfolgt die Abrechnung des Ladevorgangs mithin zeitversetzt, beispielsweise am Ende einer Abrechnungsperiode insbesondere monatlich oder quartalsweise. Eine Kontrolle des Zählerstands ist folglich zum Zeitpunkt der Abrechnung für den Nutzer nicht mehr möglich. Es ist insofern beispielsweise aus der US 2009/0021213 A1, der DE 10 2009 014 295 A1, der CN 204 761 090 U und der DE 20 2010 014 316 U1 bekannt, die Ladestation mit einem Belegdrucker zu versehen und dem Nutzer nach der Beendigung des Ladevorgangs eine Quittung mit den wesentlichen Informationen zum Ladevorgang als Papierbeleg zur Verfügung zu stellen. In der Praxis haben sich diese Ladestationen gleichwohl nicht durchgesetzt. Dies mag insbesondere daran liegen, dass der logistische Aufwand deutlich zunimmt, welcher mit dem Bereitstellen von Papier und der Wartung des Druckers verbunden ist.

Aus der DE 10 2012 011 773 A1 ist eine Ladestation mit einer Kommunikationsvorrichtung bekannt, welche eingerichtet ist zum Aufbau einer Nachfeldkommunikationsverbindung mit einem mobilen Kommunikationsgerät und dass darüber hinaus eine Weitverkehrsverbindung mit einem Zentralrechner aufbaubar ist.

Aus der DE 20 2014 104 920 U1 ist eine Ladestation für elektrische Fahrzeuge mit einem Energiezähler und einer Zentralsteuereinheit bekannt. Darüber hinaus macht die Physikalisch-Technische Bundesanstalt (PTB) in ihrer Publikation "Anforderungen an elektrische und softwaregesteuerte Messgeräte und Zusatzeinrichtungen für Elektrizität, Gas, Wasser und Wärme" aus April 2002 Vorgaben zur eichrechtskonformen Abrechnung unter anderem an Ladestationen.

Aus der EP 2 579 417 A1 ist eine Ladeinfrastruktur bekannt, welche ausgebildet ist zum Erfassen und Abrechnen einer an ein Fahrzeug übertragenen elektrischen Energie.

Aufgabe der vorliegenden Erfindung ist es, eine Ladestation und ein Betriebsverfahren für eine Ladestation anzugeben, welche den Vorgaben des Mess- und Eichgesetzes genügen. Der Ladevorgang soll insofern eichrechtskonform gegenüber einem Nutzer abrechenbar sein und die Unterhaltung der Ladestation sich vereinfachen.

Zur Lösung der Aufgabe weist die Erfindung die Merkmale des Patentanspruchs 1 auf. Weitere Ausführungsformen der Erfindung ergeben sich aus den Unteransprüchen.

Der besondere Vorteil der Erfindung besteht darin, dass als Teil der Ladestation ein separat ausgebildetes Sicherheitsmodul mit einem eigenen Gehäuse (Sicherheitsgehäuse) vorgesehen ist. Das Sicherheitsmodul dient der manipulationsgeschützten und dauerhaften Speicherung aller zur Abrechnung des Ladevorgangs relevanten Informationen. Der Nutzer beziehungsweise Rechnungsempfänger kann insofern sicher sein, dass die Abrechnung des Ladevorgangs korrekt erfolgt und/oder zu einem späteren Zeitpunkt überprüft werden kann.

Das Sicherheitsmodul weist nach der Erfindung einen Sicherheitsprozessor sowie einen Sicherheitsdatenspeicher auf. Der Sicherheitsprozessor und der Sicherheitsdatenspeicher sind zusätzlich und räumlich getrennt von der Zentralsteuereinheit und einem Zentralprozessor und/oder einem Zentralspeicher der Ladestation als eigenständige Funktionskomponenten ausgebildet. Der Sicherheitsprozessor dient insofern nicht dazu, den eigentlichen Ladevorgang durchzuführen. Ebenso wenig dient er dazu, eine Kommunikation der Ladestation mit externen Komponenten, beispielsweise einer ortsfern von der Ladestation vorgesehenen Zentralstation eines Betreibers der Ladestation, dem mit der Ladestation über ein Ladekabel verbundenen Fahrzeug oder dem Nutzer während des Ladevorgangs zu realisieren. All diese Funktionen werden von der Zentralsteuereinheit mit dem Zentralprozessor und dem optional vorgesehenen Zentralspeicher übernommen.

Das Sicherheitsmodul hat zur Realisierung der ausreichenden mechanischen und/oder informationstechnischen Sicherheit neben dem Sicherheitsgehäuse eine erste Datenleitungsschnittstelle und eine zweite Datenleitungsschnittstelle.

Die zweite Datenleitungsschnittstelle verbindet das Sicherheitsmodul mit der Zentralsteuereinheit der Ladestation. Sie ist rückwirkungsfrei ausgebildet und verhindert, dass in unzulässiger Weise ein Zugriff auf das Sicherheitsmodul erfolgt und insbesondere in dem Sicherheitsdatenspeicher des Sicherheitsmoduls gespeicherte Daten gelöscht oder verändert werden.

Kern der Erfindung ist es demzufolge, die Eichrechtskonformität der erfindungsgemäßen Ladestation durch das Vorsehen eines nicht manipulierbaren Sicherheitsdatenspeichers für die abrechnungsrelevanten Daten des Ladevorgangs herzustellen. Der Sicherheitsdatenspeicher ist als Teil eines vor einem manipulativen Zugriff mechanisch wie datentechnisch geschützten Sicherheitsmoduls, welches mit einem eigenen Sicherheitsgehäuse ausgestattet ist und von dem Vorrichtungsgehäuse der Ladestation umgeben wird.

Die erfindungsgemäße Ladestation kann als AC-Ladestation oder als DC-Ladestation ausgebildet sein. Während bei der AC-Ladestation beispielsweise ein Schütz als Schaltelement vorgesehen sein kann, kann bei der DC-Ladestation die Leistungselektronik zum Aktivieren beziehungsweise Deaktivieren des Ladevorgangs dienen. Insofern kann das Schaltelement bei der DC-Ladestation beispielsweise als elektronisches Schaltelement und insbesondere als ein Bipolartransistor mit isolierter Gate-Elektrode (IGBT) realisiert sein.

Im Sinne der Erfindung ist der Energiezähler der erfindungsgemäßen Ladestation geeicht, wenn er nach lokalen, nationalen beziehungsweise länderübergreifenden Vorgaben zugelassen ist, um zu Abrechnungszwecken eingesetzt zu werden. Beispielsweise werden Energiezähler mit einer Konformitätsbescheinigung, beispielsweise MID-konforme Energiezähler als geeichte Energiezähler im Sinne der Erfindung aufgefasst.

Im Sinne der Erfindung gilt die Verbindung des Sicherheitsmoduls mit der Zentralsteuereinheit als rückwirkungsfrei gemäß der PTB-A 50.7 der Physikalisch Technischen Bundesanstalt (Stand: 2002) oder gleichwertiger sonstiger lokaler, nationaler beziehungsweise länderübergreifender Standards. Hiervon umfasst ist unter anderem die elektrische Rückwirkungsfreiheit derart, dass durch Kurzschlüsse zwischen beliebigen Anschlüssen der zweiten Datenleitungsschnittstelle eichtechnisch relevante Funktionen und Daten, welche in dem Sicherheitsmodul realisiert beziehungsweise gespeichert sind, nicht beeinflusst werden. Darüber hinaus ist die Datenleitungsschnittstelle logisch rückwirkungsfrei auszubilden derart, dass die speziellen Softwareanforderungen nach dem Anhang PTB-A 50.7-1 zur vorstehend genannten Norm realisiert sind und insbesondere nur vorab definierte Zugriffe durchgeführt und/oder Daten übertragen werden können. Es ist hierbei insbesondere berücksichtigt, dass die Verarbeitungsroutinen des Sicherheitsmoduls über die zweite Datenleitungsschnittstelle nicht in unzulässiger Weise beeinflusst werden können.

Ferner umfasst die erfindungsgemäße Ladestation eine Betätigungseinrichtung, welche ausgebildet ist zur Entgegennahme eines Betätigungssignals, mit dem der Ladevorgang gestartet (Startsignal) oder gestoppt (Stoppsignal) werden kann. Überdies kann ein Unterbrechungssignal für den Ladevorgang als weiteres Betätigungssignal vorgesehen sein. Die Betätigungseinrichtung umfasst beispielsweise eine Nutzerinteraktionsschnittstelle, welche insbesondere nach Art eines RFID-Lesers ausgebildet sein kann. Darüber hinaus umfasst die Betätigungseinrichtung insbesondere alle separat oder als Teil anderer Funktionskomponenten der Ladestation ausgebildete Empfangseinheiten. Sie dient insofern beispielsweise dem kabellosen oder leitungsgebundenen Empfang des Betätigungssignals von dem mit der Ladestation verbundenen Fahrzeug oder einer ortsfern von der Ladestation vorgesehenen Zentralstation. Insbesondere können Teile der Zentralsteuereinheit der Betätigungseinrichtung zugeordnet sein.

Das Sicherheitsmodul und der Energiezähler können beispielsweise als getrennte Bauteile realisiert sein. Das Sicherheitsmodul und der Energiezähler können dann räumlich getrennt voneinander in der Ladestation vorgesehen sein. Beispielsweise können der Energiezähler und das Sicherheitsmodul unmittelbar aneinander angebaut sein derart, dass das Sicherheitsgehäuse des Sicherheitsmoduls an ein Gehäuse des Energiezählers angebaut ist. Beispielsweise können die aneinander angebauten Gehäuse miteinander verbunden sein. Insbesondere kann vorgesehen sein, dass eine Trennung der Gehäuse nicht möglich ist oder zu einem späteren Zeitpunkt nachgewiesen werden kann. Es kann insofern beispielsweise das Sicherheitsgehäuse des Sicherheitsmoduls mit dem Gehäuse des Energiezählers verplombt sein beziehungsweise eine Versiegelung vorgesehen sein. Beispielsweise können der Energiezähler und das Sicherheitsmodul räumlich integriert sein. Das Sicherheitsgehäuse bildet dann ein gemeinsames Gehäuse für den Energiezähler und das Sicherheitsmodul. Auf ein separates Gehäuse für den Energiezähler kann dann optional verzichtet werden.

Die erste Datenleitungsschnittstelle dient dazu, dass Sicherheitsmodul über die gesicherte Datenleitung mit dem Energiezähler der Ladestation zu verbinden. Die gesicherte Datenleitung kann beispielsweise als konduktive Datenleitung, das heißt als elektrisch leitendes Datenkabel ausgebildet sein. Insbesondere kommt ein Kupferkabel oder ein Aluminiumkabel als konduktive Datenleitung infrage. Beispielsweise kann ein nicht-konduktives Datenkabel, beispielsweise ein Glasfaserkabel vorgesehen sein zur Signalübertragung. Ebenfalls kann vorgesehen sein, dass die Signalübertragung mittels einer nicht kabelgebundenen Datenleitung, beispielsweise via Funk oder optisch erfolgt.

Nach einer Weiterbildung der Erfindung kann die gesicherte Datenleitung beispielsweise im Sinne einer Kapselung und/oder Einhäusung mechanisch gegen einen unautorisierten und insbesondere in manipulativer Absicht durchgeführten Zugriff gesichert sein. Die gesicherte Datenleitung kann beispielsweise verplombt ausgebildet sein. Sofern der Energiezähler in das Sicherheitsmodul integriert ist und/oder die Gehäuse des Energiezählers und des Sicherheitsmoduls aneinander angebaut und manipulationssicher verbunden sind, kann die mechanische Sicherung der Datenleitung durch die verplombten Gehäuse selbst bereitgestellt sein. Beispielsweise kann die Sicherheit über elektrische beziehungsweise elektronische Mittel hergestellt werden. Insofern kann die Datenleitung der Übertragung signierter beziehungsweise verschlüsselter Zählerstände von dem Energiezähler an das Sicherheitsmodul dienen. Die Sicherung der Datenleitung kann nach der Erfindung rein mechanisch (beispielsweise Kapselung, Einhäusung, Verplombung) oder rein elektrisch (beispielsweise Signatur, Verschlüsselung) oder mechanisch und elektrisch zugleich ausgebildet sein.

Nach einer Weiterbildung der Erfindung kann die erste Datenleitungsschnittstelle als bidirektionale Schnittstelle ausgebildet sein zur Übertragung von Daten von dem Sicherheitsmodul zu dem Energiezähler einerseits und von dem Energiezähler zu dem Sicherheitsmodul andererseits. Beispielsweise können bei der bidirektionalen Ausbildung der Datenleitungsschnittstelle Abfragesignale von dem Sicherheitsmodul an den Energiezähler übertragen werden. Der Energiezähler sendet dann nach Empfang der Abfragesignale den aktuellen Zählerstand über die erste Datenleitungsschnittstelle an das Sicherheitsmodul. Alternativ kann die erste Datenleitungsschnittstelle ausgebildet zur monodirektionalen Übertragung von Daten (Zählerständen) des Energiezählers an das Sicherheitsmodul.

Nach einer Weiterbildung der Erfindung umfasst das Sicherheitsmodul ein Sicherheitsgehäuse, welches vor einem nicht autorisierten Zugriff geschützt ist. Insofern kann das Sicherheitsgehäuse des Sicherheitsmoduls beispielsweise verplombt oder versiegelt sein, um einen Manipulationsversuch beziehungsweise einen nicht autorisierten Zugriff nachweisen zu können

Nach der Erfindung sieht die Ladestation eine dem Sicherheitsmodul zugeordnete Eingabeeinrichtung vor. Über die Eingabeeinrichtung kann ein Nutzer der Ladestation in einer vorab exakt definierten Weise mit dem Sicherheitsmodul beziehungsweise dem Sicherheitsprozessor des Sicherheitsmoduls und dem Sicherheitsdatenspeicher des Sicherheitsmoduls derart interagieren, dass abrechnungsrelevante und in dem Sicherheitsdatenspeicher eichrechtskonform und dauerhaft gespeicherte Informationen zu einem spezifischen Ladevorgang, insbesondere die Anfangsenergiemenge und die Endenergiemenge für einen Ladevorgang vom Nutzer selbst überprüft werden können.

Nach einer Weiterbildung der Erfindung ist die Eingabeeinrichtung als Teil des Sicherheitsmoduls ausgebildet und/oder in dem Sicherheitsgehäuse angeordnet. Die Eingabeeinrichtung kann dann vorteilhaft unmittelbar mit dem Sicherheitsprozessor des Sicherheitsmoduls interagieren. Eine Kommunikation mittelbar über die Zentralsteuereinheit, die Steuerungsleitung und die zweite Datenleitungsschnittstelle können entfallen. Die Eingabeeinrichtung ist dann zusätzlich zu optionalen weiteren Betätigungselementen der Ladestation vorgesehen.

Nach einer alternativen Ausführungsform der Erfindung können an der Ladestation ohnehin vorgesehene Eingabemittel, beispielsweise eine Tastatur oder ein Taster zugleich als Eingabeeinrichtung für das Sicherheitsmodul dienen. Ebenso kann eine Funkschnittstelle der Ladestation oder eine optische Schnittstelle zugleich als Eingabemittel für das Sicherheitsmodul dienen. Den ohnehin vorgesehenen Eingabemitteln kommt insofern eine Doppelfunktion zu. Sie dienen zum einen der Bedienung der Ladestation in üblicher Weise durch den Nutzer und zugleich als Eingabeeinrichtung für das Sicherheitsmodul und hier insbesondere zur Eingabe eines Prüfsignals für den Nutzer.

Nach einer Weiterbildung der Erfindung sieht die Eingabeeinrichtung wenigstens zwei Eingabetasten vor, welche vorzugsweise als kapazitiv wirksame Eingabetasten ausgebildet sind.

Nach einer Weiterbildung der Erfindung ist die Eingabeeinrichtung in dem Vorrichtungsgehäuse der Ladestation derart angeordnet, dass sie von einem außenstehenden Nutzer betätigbar ist, der keinen Zugriff auf die in dem Vorrichtungsgehäuse verbauten und unzugängigen Funktionskomponenten der Ladestation hat und der - anders als beispielsweise ein Wartungstechniker - nicht über die Möglichkeit verfügt, eine Tür oder Klappe des Vorrichtungsgehäuses zu öffnen.

Die Datenanzeigeeinrichtung des Sicherheitsmoduls dient insbesondere zur Überprüfung der abrechnungsrelevanten Daten eines Ladevorgangs, welche in dem Sicherheitsdatenspeicher des Sicherheitsmoduls abgelegt sind. Es ist insofern insbesondere vorgesehen, dass bei einer Überprüfung durch den Nutzer in dem Sicherheitsdatenspeicher abgelegte Daten überprüft werden und die im Sicherheitsdatenspeicher abgelegten Daten und/oder eine Prüfrückmeldung für den Nutzer von der Datenanzeigeeinrichtung angezeigt werden.

Da die Datenanzeigeeinrichtung als zugriffsgeschützte Komponente des Sicherheitsmoduls vorgesehen und von dem Sicherheitsgehäuse des Sicherheitsmoduls -jedenfalls abschnittsweise umgriffen - angeordnet ist, ist nach einer Weiterbildung der Erfindung vorgesehen, dass an dem Vorrichtungsgehäuse der Ladestation eine Ausnehmung vorgesehen ist und dass die Ausnehmung der Datenanzeigeeinrichtung des Sicherheitsmoduls derart zugeordnet ist, dass die Datenanzeigeeinrichtung von einem außenstehenden Nutzer durch die Ausnehmung des Vorrichtungsgehäuses hindurch einsehbar ist. Es ist insofern vorteilhaft eine besondere Sicherung gegen eine missbräuchliche Manipulation realisiert und das Sicherheitsmodul gegen einen unautorisierten Zugriff geschützt. Beispielsweise kann im Bereich der Ausnehmung eine transparente Scheibe vorgesehen sein, die einen unmittelbaren mechanischen Zugriff auf das Sicherheitsmodul im Sinne eines Berührschutzes verhindert. Die Ausnehmung an dem Vorrichtungsgehäuse kann überdies so vorgesehen sein und/oder das Sicherheitsmodul in dem Vorrichtungsgehäuse der Ladestation so angeordnet sein, dass von außen durch die Ausnehmung hindurch eine Plombe für das Sicherheitsgehäuse und/oder ein Prüfsiegel (Zertifizierungsstempel, Sicherheitsetikette) und/oder eine Seriennummer des Sicherheitsmoduls sichtbar sind. Ebenso kann ein Laufwerk des Energiezählers beziehungsweise ein Datenanzeigemodul des Energiezählers durch die Ausnehmung hindurch sichtbar sein.

Für den Betrieb der Ladestation ist es gewünscht, dass der Nutzer sich regelmäßig über den Fortgang des Ladevorgangs informieren kann. Zu diesem Zweck benötigt die Zentralsteuereinheit der Ladestation eine regelmäßige Information über den aktuellen Zählerstand. Die Zentralsteuereinheit kann die Information über den aktuellen Zählerstand beispielsweise mittelbar über die Steuerungsleitung von dem Sicherheitsmodul erhalten. Beispielsweise kann eine zusätzliche Datenleitung vorgesehen sein, über die der Energiezähler und die Zentralsteuereinheit verbunden sind und über die der aktuelle Zählerstand übertragen wird. Die sichere Datenleitung und/oder die zusätzliche Datenleitung und/oder die Steuerungsleitung können als separate Leitungen einer Punkt-zu-Punkt-Verkabelung und/oder als Leitungen in einem Bussystem ausgebildet sein.

Zur Lösung der Aufgabe weist das erfindungsgemäße Betriebsverfahren die Merkmale des Patentanspruchs 12 auf.

Der besondere Vorteil der Erfindung besteht darin, dass bei der Durchführung des Ladevorgangs unmittelbar zu Beginn und bei der Beendigung desselben der jeweils aktuelle Zählerstand eines geeichten Energiezählers der Ladestation in einem Sicherheitsdatenspeicher manipulationsgeschützt abgelegt und gespeichert wird. Es ist insofern gewährleistet, dass zu jedem späteren Zeitpunkt die abrechnungsrelevanten Zählerstände abgerufen und überprüft werden können. Eine eichrechtskonforme Abrechnung des Ladevorgangs ist insofern gewährleistet, ohne dass ein Papierbeleg hergestellt werden muss.

Die Zentralsteuereinheit überträgt erfindungsgemäß ein erstes Triggersignal beim Beginn des Ladevorgangs und ein zweites Triggersignal bei der Beendigung des Ladevorgangs rückwirkungsfrei an einen Sicherheitsprozessor des Sicherheitsmoduls, der mit dem Sicherheitsdatenspeicher zusammenwirkt. Die Triggersignale werden erzeugt, sobald ein Startsignal als ein erstes Betätigungssignal für die Ladestation beziehungsweise ein Stoppsignal als ein zweites Betätigungssignal für die Ladestation empfangen und an die Ladestation geleitet werden.

Erfindungsgemäß können das Startsignal und/oder das Stoppsignal (Betätigungssignale) in sehr unterschiedlicher Weise erzeugt werden. Beispielsweise können das Startsignal und/oder das Stoppsignal von einem Benutzer manuell erzeugt werden, indem ein Betätigungselement betätigt wird oder eine Kundenkarte eingelesen wird. Beispielsweise können die Betätigungssignale von einem mit der Ladestation verbundenen Fahrzeug bereitgestellt werden. Beispielsweise kann insbesondere das Stoppsignal erzeugt werden, wenn eine Verbindung zwischen dem Steckelement und dem Gegensteckelement getrennt wird.

Es kann insbesondere vorgesehen sein, dass nach dem Empfang des Startsignals die Zentralsteuereinheit zuerst das erste Triggersignal an das Sicherheitsmodul sendet, sodass dort der aktuelle Zählerstand des geeichten Energiezählers als Anfangsenergiemenge (Anfangszählerstand) gespeichert wird und dann der Ladevorgang aktiviert wird durch Betätigung des Schaltelements. In analoger Weise kann vorgesehen sein, dass beim Empfang des Stoppsignals zunächst das Schaltelement betätigt wird zum Deaktivieren des Ladevorgangs und dann das zweite Triggersignal an das Sicherheitsmodul gesendet wird. Dort wird folglich die Endenergiemenge (Endzählerstand) für den Ladevorgang gespeichert, nachdem der Ladevorgang beendet und das Schaltelement betätigt ist.

Beispielsweise kann vorgesehen sein, dass das Schaltelement nach dem Empfang des Startsignals erst betätigt wird, sofern über einen an der Ladestation vorgesehenen Sensor festgestellt ist, dass das Fahrzeug an die Ladestation angeschlossen ist beziehungsweise ein Gegensteckelement mit dem Steckelement der Ladestation verbunden ist. Beispielsweise kann nach der Erfindung vorgesehen sein, dass die Unterbrechung der elektrisch leitenden Verbindung von der Ladestation zum Fahrzeug als Stoppsignal erkannt beziehungsweise aufgefasst wird.

Optional kann ein Unterbrechungssignal als ein zusätzliches Betätigungssignal bereitgestellt sein. Anlässlich des Empfangs des Unterbrechungssignals kann von dem Sicherheitsmodul ein Zwischenzählerstand als Unterbrechungsenergiemenge in dem Sicherheitsdatenspeicher gespeichert werden.

Nach einer bevorzugten Ausführungsform der Erfindung wird zusammen mit dem Betätigungssignal eine ID empfangen, welche zur Identifizierung des Nutzers und/oder eines Rechnungsempfängers dient. Insbesondere kann die ID von der Betätigungseinrichtung empfangen werden. Die ID wird von der Zentralsteuereinheit an den Sicherheitsprozessor des Sicherheitsmoduls gesendet und zusammen mit der Anfangsenergiemenge und der Endenergiemenge in dem Sicherheitsdatenspeicher des Sicherheitsmoduls geschrieben. Insbesondere kann vorgesehen sein, dass die ID zusammen mit der Anfangsenergiemenge und der Endenergiemenge in einem Datenarray gemeinsam gespeichert werden.

Nach einer Weiterbildung der Erfindung werden zusätzlich zu dem Anfangszählerstand und dem Endzählerstand sowie der optional erfassten ID das Datum und die Uhrzeit ermittelt, gespeichert und/oder angezeigt, zu der der Ladevorgang beginnt. In Ergänzung dessen können beispielsweise das Datum und die Uhrzeit des Endes des Ladevorgangs und/oder eine Ladedauer ermittelt, gespeichert und/oder angezeigt werden. Die Ladedauer kann insbesondere ermittelt werden, indem eine Zeitmessung beim Start des Ladevorgangs beginnt und beim Ende des Ladevorgangs beendet wird.

Nach einer Weiterbildung der Erfindung kann vorgesehen sein, dass zur Bestimmung der Ladedauer eine geeichte Zeiterfassungs- beziehungsweise Messvorrichtung verwendet wird. Die geeichte Zeiterfassungs- beziehungsweise Messvorrichtung kann als Teil des Sicherheitsmoduls oder als separate Funktionskomponente ausgeführt sein. Die Messwerte für die Ladedauer werden in dem Sicherheitsdatenspeicher des Sicherheitsmoduls manipulationsgeschützt abgelegt beziehungsweise gespeichert. Die Speicherung kann zusammen mit dem Datum und der Uhrzeit des Beginns und/oder des Endes des Ladevorgangs erfolgen.

Nach einer Weiterbildung der Erfindung wird der aktuelle Zählerstand von dem Energiezähler exklusiv über die gesicherte Datenleitung an den Sicherheitsprozessor des Sicherheitsmoduls übertragen. Vorteilhaft ergibt sich hierdurch eine besonders hohe Sicherheit, da einer Manipulation der Zählerstände vorgebeugt ist und der Energiezähler allein über die gesicherte Datenleitung mit den weiteren Funktionskomponenten der Ladestation und insbesondere mit dem Sicherheitsmodul interagiert. Der Energiezähler ist dann nicht über eine zusätzliche Datenleitung unmittelbar mit der Zentralsteuereinheit verbunden.

Nach einer Weiterbildung des erfindungsgemäßen Verfahrens wird der aktuelle Zählerstand von dem Sicherheitsmodul an die Zentralsteuereinheit übertragen. Es ergibt sich insofern eine mittelbare Übertragung der aktuellen Zählerstände an die Zentralsteuereinheit. Vorteilhaft ist gewährleistet, dass die der Zentralsteuereinheit übertragenen aktuellen Zählerstände mit den aktuellen Zählerständen des Sicherheitsmoduls übereinstimmen. Einer Manipulation ist insofern besonders effektiv vorgebeugt. Darüber hinaus sinkt der mechanische Verkabelungsaufwand, da die mittelbare Kommunikation über die gesicherte Datenleitung einerseits und die Steuerungsleitung andererseits erfolgen kann.

Zusätzlich zu dem aktuellen Zählerstand kann von dem Energiezähler eine Information über die aktuellen Werte der Spannung, des Stroms, der elektrischen Leistung oder dergleichen zur Verfügung gestellt werden. Diese Werte können dann von der Zentralsteuereinheit verarbeitet und zur Überwachung beziehungsweise Beeinflussung des Ladevorgangs verwendet werden. Optional kann eine Speicherung in dem Sicherheitsmodul oder bevorzugt in einem Zentralspeicher der Ladestation vorgesehen werden.

Im Rahmen der Überprüfung einer dem Rechnungsempfänger in Rechnung gestellten Energiemenge beziehungsweise der korrekten Abrechnung insgesamt können über die dem Sicherheitsmodul zugeordnete Eingabeeinrichtung zum einen die auf der Rechnung ausgewiesene Anfangsenergiemenge und zum anderen die auf der Rechnung ausgewiesene, der Anfangsenergiemenge zugeordnete Endenergiemenge als Prüfsignale vom Nutzer eingegeben werden. Die eingegebene Anfangsenergiemenge und die Endenergiemenge werden mit den in dem Sicherheitsdatenspeicher gespeicherten Anfangsenergiemengen und Endenergiemengen verglichen. Bei einer Übereinstimmung der eingegebenen Energiemengen mit den gespeicherten Energiemengen wird eine positive Prüfrückmeldung an den Nutzer herausgegeben. Es kann insbesondere vorgesehen sein, dass die eingegebene Anfangsenergiemenge und/oder die eingegebene Endenergiemenge und/oder die in dem Sicherheitsdatenspeicher gespeicherte Anfangsenergiemenge und/oder die in dem Sicherheitsdatenspeicher gespeicherte Endenergiemenge und/oder die positive Prüfrückmeldung von der Datenanzeigeeinrichtung des Sicherheitsmoduls angezeigt werden. Die Anzeige der Daten erfolgt so, dass der Nutzer die Daten von außen visuell prüfen kann, insbesondere mithilfe der an dem Vorrichtungsgehäuse vorgesehenen Ausnehmung.

Eine Überprüfung der Rechnung kann beispielsweise auch anhand der Zeitdaten erfolgen. Insofern können optional das Datum und die Uhrzeit abgespeichert werden, an dem der Ladevorgang gestartet wurde. Zusätzlich können das Datum und die Uhrzeit, an dem der Ladevorgang beendet wurde und/oder die Dauer des Ladevorgangs gespeichert werden. Eine Überprüfung der Rechnung kann dann beispielsweise erfolgen, indem auf der Rechnung ausgewiesene Datums- und Zeitangaben als Prüfsignale vom Nutzer eingegeben und mit den gespeicherten Werten verglichen werden.

Nach einer Weiterbildung der Erfindung kann von der Zentralsteuereinheit ein Auslesesignal rückwirkungsfrei an das Sicherheitsmodul gesendet und von dem Sicherheitsprozessor derart verarbeitet werden, dass der Sicherheitsdatenspeicher ausgelesen wird und alle oder einzelne in dem Sicherheitsdatenspeicher gespeicherten Energiemengen und/oder ID an die Zentralsteuereinheit übertragen werden. Die Übertragung des Auslesesignals und der gespeicherten Energiemengen und/oder ID erfolgt insbesondere über die Steuerungsleitung sowie die zweite Datenleitungsschnittstelle.

Vorteilhaft kann durch das Vorsehen einer Ausleseroutine und das Senden des Auslesesignals der Sicherheitsdatenspeicher ausgelesen und im ersten Schritt alle abrechnungsrelevanten, dort gespeicherten Daten an die Zentralsteuereinheit übertragen werden. Es kann dann in einem weiteren Schritt vorgesehen sein, dass diese Daten von der Zentralsteuereinheit an eine übergeordnete und insbesondere ortsferne Abrechnungsstelle übertragen werden, wo dann die verschiedenen Ladevorgänge abgerechnet und Rechnungen erstellt werden. Überdies kann vorgesehen sein, dass speziell ein einzelner Ladevorgang überprüft wird. Dies kann beispielsweise erfolgen, wenn zu einer speziellen Rechnung oder einem einzelnen, auf der Rechnung ausgewiesenen Ladevorgang ein Widerspruch eingeht. Die speziellen Rechnungspositionen können dann individuell überprüft werden. Sofern die Überprüfung ergibt, dass ein Fehler nicht vorliegt, kann eine Überprüfung vor Ort vorgesehen werden, um die Vorbehalte des Rechnungsempfängers auszuräumen.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Ladestation gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: ein Blockschaltbild einer erfindungsgemäßen Ladestation mit einem Sicherheitsmodul und
- Fig. 2: eine Detaillierung des Sicherheitsmoduls der erfindungsgemäßen Ladestation nach Fig. 1.

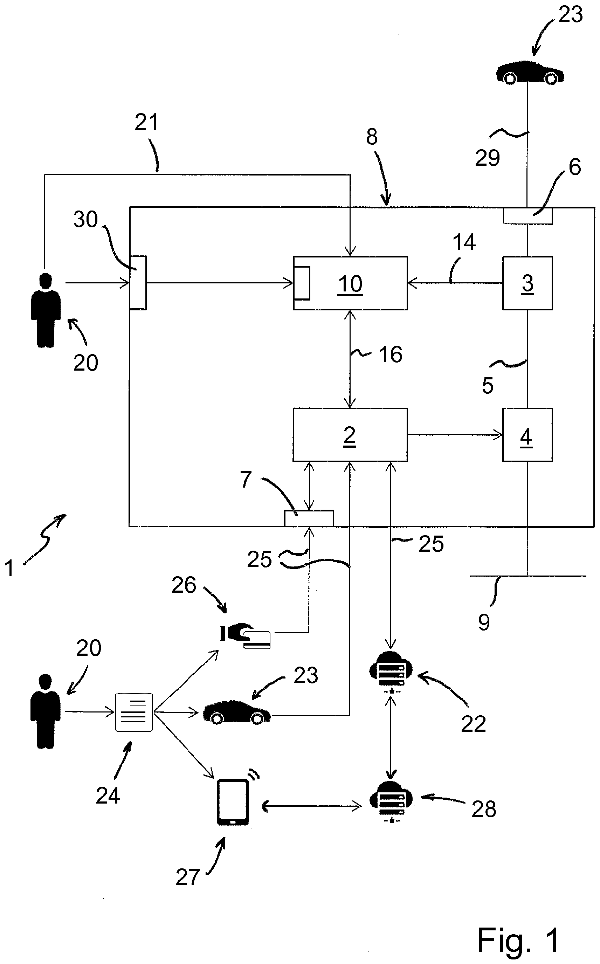

Eine erfindungsgemäße Ladestation 1 nach Fig. 1 umfasst als funktionswesentliche Komponenten eine Zentralsteuereinheit 2, einen geeichten Energiezähler 3, ein Schaltelement 4 zum Schalten einer Ladeleitung 5 sowie ein mit der Ladeleitung 5 verbundenes Steckelement 6 und eine Nutzerinteraktionsschnittstelle 7. Die Funktionskomponenten sind einem Vorrichtungsgehäuse 8 der Ladestation 1 zugeordnet. Die Ladeleitung 5 ist an ein externes Versorgungsnetz 9 angeschlossen.

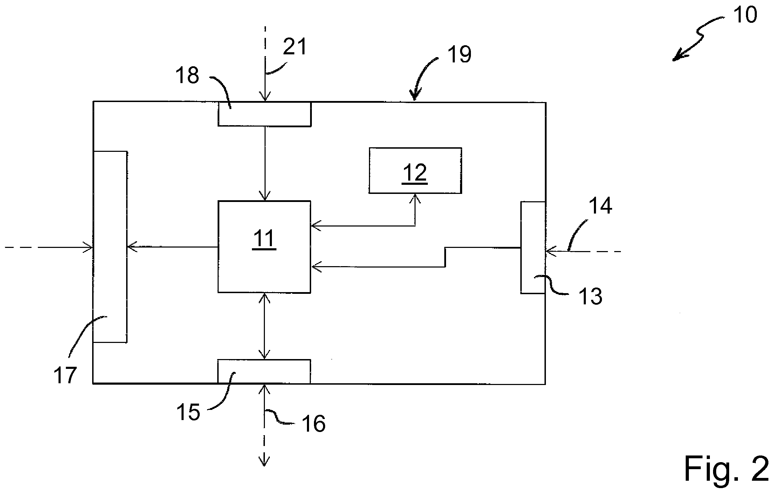

Zusätzlich ist in dem Vorrichtungsgehäuse 8 der Ladestation 1 ein Sicherheitsmodul 10 vorgesehen, welches im Detail in Fig. 2 dargestellt ist. Das Sicherheitsmodul 10 sieht einen Sicherheitsprozessor 11 und einen mit dem Sicherheitsprozessor 11 zusammenwirkenden Sicherheitsdatenspeicher 12 vor. Des Weiteren ist eine erste Datenleitungsschnittstelle 13 vorgesehen, die dazu dient, das Sicherheitsmodul 10 über eine gesicherte Datenleitung 14 mit dem Energiezähler 3 zu verbinden. Des Weiteren ist eine zweite Datenleitungsschnittstelle 15 an dem Sicherheitsmodul 10 vorgesehen. Die zweite Datenleitungsschnittstelle 15 dient der Verbindung des Sicherheitsmoduls 10 mit der Zentralsteuereinheit 2 über eine Steuerungsleitung 16. Der Sicherheitsprozessor 11 wirkt zudem mit einer Datenanzeigeeinrichtung 17 des Sicherheitsmoduls 10 zusammen. Die Datenanzeigeeinrichtung 17 ist ausgebildet zur Anzeige von Daten, welche in dem Sicherheitsdatenspeicher 12 abgelegt sind und/oder zur Anzeige einer Prüfrückmeldung. Des Weiteren ist als Teil des Sicherheitsmoduls 10 eine Eingabeeinrichtung 18 vorgesehen, welche ausgebildet ist zum Empfang eines Prüfsignals 21 von einem außenstehenden Nutzer 20 ohne Zugriff auf das Innere der Ladestation 1. Der Sicherheitsprozessor 11, der Sicherheitsdatenspeicher 12, die erste Datenleitungsschnittstelle 13, die zweite Datenleitungsschnittstelle 15, die Datenanzeigeeinrichtung 17 sowie die Eingabeeinrichtung 18 des Sicherheitsmoduls 10 sind in einem Sicherheitsgehäuse 19 des Sicherheitsmoduls 10 vorgesehen. Das Sicherheitsgehäuse 19 des Sicherheitsmoduls 10 ist mechanisch gegen einen unautorisierten Zugriff geschützt und insbesondere verplombt ausgeführt. Aufgrund der Verplombung des Sicherheitsgehäuses 19 kann eine Manipulation des Sicherheitsmoduls 10 nachgewiesen werden.

Die Zentralsteuereinheit 2 umfasst beispielsweise einen nicht separat dargestellten Zentralprozessor zur Steuerung der Ladestation 1 sowie einen Zentralspeicher (ebenfalls nicht dargestellt), in dem Funktionsparameter der Ladestation 1 und/oder Daten zum Ladevorgang jedenfalls temporär abgespeichert sind. Darüber hinaus verfügt die Ladestation 1 über ein nicht dargestelltes Sende- und Empfangsmodul, welches mit der Zentralsteuereinheit 2 zusammenwirkt und mit einer ortsfern von der Ladestation vorgesehenen Zentralstation 22 des Betreibers der Ladestation 1 kommuniziert. Insbesondere die Nutzerinteraktionsschnittstelle 7 und die Sende- und Empfangseinheit sind Teil einer zum Entgegennehmen von Betätigungssignalen ausgebildeten Betätigungseinrichtung.

Will der Nutzer 20 nun ein elektrisch betreibbares Fahrzeug 23 an der Ladestation 1 laden, hat er hierzu die Möglichkeit, falls er über einen Vertrag 24 mit dem Betreiber der Ladestation 1 verbunden ist. Der Vertrag 24 muss nicht auf ihn selbst lauten. Beispielsweise kann es sich um einen Firmenvertrag oder Flottenvertrag handeln, den der Nutzer 20 beziehungsweise das Fahrzeug 23 in Anspruch nehmen kann.

Es ist dann weiter so, dass von dem Nutzer 20 ein Betätigungssignal 25 an die Ladestation 1 gesendet und dieses Signal von der Betätigungseinrichtung empfangen und an die Zentralsteuereinheit 2 geleitet wird. Das Betätigungssignal 25 kann beispielsweise generiert werden, indem der Nutzer 20 mithilfe einer ID-Karte 26 über die Nutzerinteraktionsschnittstelle 7 mit der Ladestation 1 kommuniziert und der Ladestation 1 auf diese Weise eine eindeutige, den Betreiber der Ladestation 1 zur Abrechnung des Ladevorgangs befähigende ID mitteilt. Beispielsweise kann das Betätigungssignal 25 von dem Fahrzeug 23 an die Ladestation 1 übertragen werden. Beispielsweise kann das Betätigungssignal 25 über ein mobiles Endgerät 27 des Nutzers 20 bevorzugt über die Zentralstation 22 und optional zusätzlich über eine Datenstation 28 eines Vertragspartners des Nutzers 20 (Mobility Service Provider) gesendet werden. Jeweils wird die ID auch bei der Übertragung des Betätigungssignals 25 von dem Fahrzeug 23 beziehungsweise dem mobilen Endgerät 27 an die Ladestation 1 übertragen.

Das Betätigungssignal 25 wird von der Zentralsteuereinheit 2 der Ladestation 1 empfangen. Die Zentralsteuereinheit 2 sendet nach dem Empfang des Betätigungssignals 25 (Startsignal) über die Steuerungsleitung 16 ein erstes Triggersignal an das Sicherheitsmodul 10. Von dem Sicherheitsmodul 10 wird beim Empfang des ersten Triggersignals ein über die sichere Datenleitung 14 empfangener aktueller Zählerstand des Energiezählers 3 als Anfangsenergiemenge in den Sicherheitsdatenspeicher 12 geschrieben und dort dauerhaft gespeichert. Bevorzugt wird mit der Übertragung des ersten Triggersignals von der Zentralsteuereinheit 2 an das Sicherheitsmodul 10 zusätzlich die ID an das Sicherheitsmodul 10 übertragen. Die ID wird nach der bevorzugten Ausführungsform zusammen mit der Anfangsenergiemenge in dem Sicherheitsdatenspeicher 12 gespeichert. Ebenfalls wird von der Zentralsteuereinheit 2 das der Ladeleitung 5 zugeordnete Schaltelement 4 betätigt und der Ladevorgang für das Fahrzeug 23 aktiviert. Durch die Aktivierung des Ladevorgangs ist elektrische Energie an dem Steckelement 6 bereitgestellt. Das Laden des Fahrzeugs 23 erfolgt dann über ein externes Ladekabel 29, welches mit dem Steckelement 6 der Ladestation einerseits und einem nicht separat dargestellten, dem Fahrzeug 23 zugeordneten Gegensteckelement andererseits verbunden ist.

Nach der Durchführung des Ladevorgangs empfängt die Zentralsteuereinheit 2 ein Stoppsignal als weiteres Betätigungssignal 25. Es wird dann ein weiteres Mal das Schaltelement 4 betätigt zum Deaktivieren des Ladevorgangs beziehungsweise zum Unterbrechen der Ladeleitung 5. Des Weiteren wird über die Steuerungsleitung 16 von der Zentralsteuereinheit 2 ein zweites Triggersignal an das Sicherheitsmodul 10 übertragen. Beim Empfang des zweiten Triggersignals schreibt der Sicherheitsprozessor 11 des Sicherheitsmoduls 10 den über die sichere Datenleitung 14 empfangenen aktuellen Zählerstand des Energiezählers 3 in den Sicherheitsdatenspeicher 12 des Sicherheitsmoduls 10. Für den Ladevorgang sind insofern also die Anfangsenergiemenge und die Endenergiemenge und bevorzugt auch die ID dauerhaft in dem Sicherheitsdatenspeicher 12 hinterlegt.

Um den Nutzer 20 den gewünschten Komfort bei der Durchführung des Ladevorgangs zu bieten und insbesondere Verlaufsdaten zu dem Ladevorgang beispielsweise auf dem mobilen Endgerät 27 zur Verfügung stellen zu können, wird der aktuelle Zählerstand von dem Energiezähler 3 fortlaufend erfasst. Vorliegend ist es so, dass der aktuelle Zählerstand über die sichere Datenleitung 14 zunächst an das Sicherheitsmodul 10 und von dort über die zweite Datenleitungsschnittstelle 15 und die Steuerungsleitung 16 an die Zentralsteuereinheit 2 übertragen wird. Die Zentralsteuereinheit 2 kann dann beispielsweise über die Zentralstation 22 und die Datenstation 28 Informationen zum Ladevorgang auf das mobile Endgerät 27 des Nutzers 20 übertragen.

Um die Sicherheit des Ladevorgangs und seine eichrechtskonforme Abrechnung gegenüber dem Nutzer 20 beziehungsweise einem Vertragspartner zu gewährleisten, ist über das Vorsehen des Sicherheitsgehäuses 19 hinaus Vorkehrung getroffen. Zum einen ist die sichere Datenleitung 14 beispielsweise mechanisch gegen einen unautorisierten Zugriff und/oder Manipulation gesichert und/oder verplombt ausgebildet mit der Folge, dass ein unautorisierter Zugriff nachgewiesen werden kann. Alternativ oder zusätzlich können die Zählerstände von dem Energiezähler 3 über die sichere Datenleitung 14 signiert und damit gegen Manipulation geschützt an das Sicherheitsmodul 10 übertragen werden. Die sichere Datenleitung 13 dient insbesondere der monodirektionalen Übertragung von Daten. Eine Übertragung ist insofern allein von dem Energiezähler 3 zu dem Sicherheitsmodul 10 möglich. Eine Übertragung von Daten von dem Sicherheitsmodul 10 über die erste Datenleitungsschnittstelle 13 nach außen ist aufgrund der Ausbildung der Schnittstelle nicht möglich.

Die zweite Datenleitungsschnittstelle 15 ist rückwirkungsfrei ausgebildet im Sinne der PTB-A 50.7 der Physikalisch Technischen Bundesanstalt und der Anhänge zu diesem Dokument. Über die zweite Datenleitungsschnittstelle 15 können nur vorab spezifizierte Informationen beziehungsweise Abfragen empfangen und übertragen werden. Ein unautorisierter Zugriff über die zweite Datenleitungsschnittstelle 15 und insbesondere eine Manipulation der Verarbeitungsroutinen in dem Sicherheitsmodul 10 und/oder eine Änderung der in dem Sicherheitsdatenspeicher 12 abgelegten Daten ist nicht möglich.

Der Nutzer 20 hat zudem die Möglichkeit, zeitversetzt zum Ladevorgang insbesondere nach dem Erhalt einer Rechnung die korrekte Abrechnung des Ladevorgangs zu überprüfen. Als Teil der Ladestation 1 und insbesondere als Teil des Sicherheitsmoduls 10 ist hierzu eine Eingabeeinrichtung 18 vorgesehen. Die Eingabeeinrichtung 18 sieht beispielsweise wenigstens zwei kapazitive Eingabetasten vor, über die der Nutzer 20 eine auf der Rechnung ausgewiesene Anfangsenergiemenge sowie eine auf der Rechnung ausgewiesene Endenergiemenge eingeben kann. Über den Sicherheitsprozessor 11 des Sicherheitsmoduls 10 wird dann geprüft, ob entsprechend korrespondierende Werte für die Anfangsenergiemenge und die Endenergiemenge in dem Sicherheitsdatenspeicher 12 des Sicherheitsmoduls 10 gespeichert sind. Abhängig vom Ergebnis der Überprüfung wird dann eine positive oder eine negative Prüfrückmeldung erzeugt. Die Prüfrückmeldung und optional zusätzlich die Anfangsenergiemenge und/oder die Endenergiemenge werden von dem Sicherheitsprozessor 11 an die Datenanzeigeeinrichtung 17 des Sicherheitsmoduls 10 übertragen und visualisiert. Der Nutzer 20 kann die Anzeige über eine Ausnehmung 30, welche korrespondierend zur Lage der Datenanzeigeeinrichtung 17 an dem Vorrichtungsgehäuse 8 der Ladestation 1 vorgesehen ist, einsehen und prüfen. Es ist dem Nutzer 20 insofern stets möglich, die manipulationsgeschützt in dem Sicherheitsdatenspeicher 12 des Sicherheitsmoduls 10 gespeicherten, abrechnungsrelevanten Daten einzusehen und die korrekte Rechnungsstellung zu überprüfen.

Um die Sicherheit für den Nutzer 20 weiter zu verbessern und einer Manipulation vorzubeugen beziehungsweise eine Manipulation transparent zu machen, können insbesondere über die Ausnehmung 30 an dem Vorrichtungsgehäuse 8 eine Plombe für das Sicherheitsgehäuse 19 des Sicherheitsmoduls 10 und/oder ein Prüfsiegel und/oder eine der sicheren Datenleitung 14 zugeordnete Plombe eingesehen werden. Der Nutzer 20 kann insofern den ordnungsgemäßen Zustand der Ladevorrichtung und insbesondere der sicheren Datenleitung 14 und/oder des Sicherheitsmoduls 10 selbst in Augenschein nehmen.

Als Komfortfunktion insbesondere für den Betreiber der Ladestation 1 kann vorgesehen sein, dass von der Zentralsteuereinheit 2 die in dem Sicherheitsdatenspeicher 12 gespeicherten abrechnungsrelevanten Parameter für einen einzelnen Ladevorgang oder für alle Ladevorgänge über die zweite Datenleitungsschnittstelle 15 und die Steuerungsleitung 16 aus dem Sicherheitsmodul 10 ausgelesen und über die Zentralsteuereinheit 2 an die Zentralstation 22 übertragen werden. Dort können die abrechnungsrelevanten Daten zur Erstellung der Rechnung aufbereitet oder zur Prüfung eines Widerspruchs des Nutzers 20 verwendet werden.

Die Erfindung ist nicht auf die dargestellte beispielhafte Gestalt der Ladestation 1 sowie das dargestellte Betriebsverfahren für die Ladestation 1 beschränkt.

Es kann beispielsweise vorgesehen sein, dass zwischen der Zentralsteuereinheit 2 und dem Energiezähler 3 der Ladestation 1 eine zusätzliche Datenleitung vorgesehen ist, über die der aktuelle Zählerstand von dem Energiezähler 3 unter Umgehung des Sicherheitsmoduls 10 an die Zentralsteuereinheit 2 übertragen wird.

Beispielsweise können die sichere Datenleitung 14 und/oder die zusätzliche Datenleitung und/oder die Steuerungsleitung 16 als Bussystem beziehungsweise Teil desselben ausgebildet sein.

Als Fahrzeuge im Sinne der Erfindung gelten alle Automobile (PKW, LKW, Wohnmobile, Zweiräder, Busse, Transporter usw.), Schienenfahrzeuge (insbesondere Lokomotiven), Wasserfahrzeuge (Schiffe), Luftfahrzeuge sowie Anhänger (Wohnanhänger), mobile Verkaufsstände usw. Die Ladestation kann ebenso verwendet werden zum Bereitstellen von elektrischer Energie für Fahrzeuge mit und ohne Energiespeicher.

Gleiche Bauteile und Bauteilfunktionen sind durch gleiche Bezugszeichen gekennzeichnet.

## Patentansprüche

1. Ladestation (1) zum Bereitstellen elektrischer Energie für ein elektrisch betreibbares Fahrzeug (23) umfassend ein Vorrichtungsgehäuse (8), umfassend ein Steckelement (6), welches mittelbar oder unmittelbar an ein dem Fahrzeug (23) zugeordnetes Gegensteckelement anschließbar ist, umfassend eine zu dem Steckelement (6) geführte Ladeleitung (5), über die die elektrische Energie zugeführt ist, umfassend ein der Ladestation (1) zugeordnetes Schaltelement (4) zum Aktivieren und/oder Deaktivieren des Ladevorgangs, umfassend einen Energiezähler (3) für die über die Ladeleitung (5) bereitgestellte elektrische Energie, umfassend eine mit dem Schaltelement (4) in einer Wirkverbindung stehenden Zentralsteuereinheit (2) mit einem Zentralprozessor und umfassend eine Betätigungseinrichtung, wobei die Betätigungseinrichtung ausgebildet ist zum Entgegennehmen eines Betätigungssignals (25), wobei die Zentralsteuereinheit (2) ausgebildet ist zum Schalten des Schaltelements (4) derart, dass der Ladevorgang in Abhängigkeit des Betätigungssignals (25) aktiviert und/oder deaktiviert wird, wobei der Energiezähler (3) als ein geeichter Energiezähler (3) ausgebildet ist und wobei in dem Vorrichtungsgehäuse (8) ein Sicherheitsmodul (10) vorgesehen ist, **dadurch gekennzeichnet, dass** das Sicherheitsmodul (10) ein separates Sicherheitsgehäuse (19), einen in dem Sicherheitsgehäuse (19) angeordneten Sicherheitsdatenspeicher (12), einen in dem Sicherheitsgehäuse (19) angeordneten Sicherheitsprozessor (11), eine dem Sicherheitsgehäuse (19) zugeordnete Datenanzeigeeinrichtung (17), eine dem Sicherheitsgehäuse (19) zugeordnete ersten Datenleitungsschnittstelle (13) und eine dem Sicherheitsgehäuse (19) zugeordnete zweite Datenleitungsschnittstelle (15) sowie eine zur Entgegennahme eines an den Sicherheitsprozessor (11) weiterzuleitenden Prüfsignals (21) ausgebildete Eingabeeinrichtung (18) vorsieht, wobei die erste Datenleitungsschnittstelle (13) des Sicherheitsmoduls (10) über eine gesicherte Datenleitung (14) mit dem Energiezähler (3) verbunden ist und dem Empfang eines aktuellen Zählerstands des Energiezählers (3) dient, wobei die zweite Datenleitungsschnittstelle (15) des Sicherheitsmoduls (10) über eine Steuerungsleitung (16) mit der Zentralsteuereinheit (2) verbunden ist und wobei die Verbindung des Sicherheitsmoduls (10) mit der Zentralsteuereinheit (2) rückwirkungsfrei ausgebildet ist.

2. Ladestation nach Anspruch 1, **dadurch gekennzeichnet, dass** ein Gehäuse des Energiezähler (3) und das Sicherheitsgehäuse (19) des Sicherheitsmoduls (10) aneinander angebaut sind und/oder dass der Energiezähler (3) und das Sicherheitsmodul (10) in dem Sicherheitsgehäuse (19) räumlich integriert vorgesehen ist.

3. Ladestation (1) nach Anspruch 1 oder 2, **dadurch gekennzeichnet, dass** die gesicherte Datenleitung (14) mechanisch gesichert und/oder verplombt ausgebildet ist und/oder dass die gesicherte Datenleitung (14) elektrisch gesichert ist, indem sie ausgebildet ist zur Übertragung signierter und/oder verschlüsselter Daten.

4. Ladestation (1) nach einem der Ansprüche 1 bis 3, **dadurch gekennzeichnet, dass** die gesicherte Datenleitung (14) und die erste Datenleitungsschnittstelle (13) ausgebildet sind zur bidirektionalen Übertragung von Daten von dem Energiezähler (3) zu dem Sicherheitsmodul (10) einerseits und von Sicherheitsmodul (10) zu dem Energiezähler (3) andererseits.

5. Ladestation (1) nach einem der Ansprüche 1 bis 4, **dadurch gekennzeichnet, dass** das Sicherheitsgehäuse (19) und/oder das Gehäuse des Energiezählers (3) mechanisch gesichert und/oder verplombt ausgebildet sind zum Schutz gegen und/oder zum Nachweis von einen Zugriff auf die in den Gehäusen (19) vorgesehenen Funktionskomponenten des Sicherheitsmoduls (10) und/oder des Energiezählers (3).

6. Ladestation (1) nach einem der Ansprüche 1 bis 5, **dadurch gekennzeichnet, dass** die Eingabeeinrichtung (18) als Teil des Sicherheitsmoduls (10) ausgebildet ist und/oder in dem Sicherheitsgehäuse (19) angeordnet ist.

7. Ladestation (1) nach einem der Ansprüche 1 bis 6, **dadurch gekennzeichnet, dass** die Eingabeeinrichtung (18) wenigstens zwei Eingabetasten vorsieht, wobei die wenigstens zwei Eingabetasten der Eingabeeinrichtung (18) bevorzugt als kapazitiv wirksame Eingabetasten ausgebildet sind.

8. Ladestation (1) nach einem der Ansprüche 1 bis 7, **dadurch gekennzeichnet, dass** die Eingabeeinrichtung (18) in dem Vorrichtungsgehäuse (8) und/oder dem Sicherheitsgehäuse (19) derart angeordnet ist, dass sie von außen betätigbar ist.

9. Ladestation (1) nach einem der Ansprüche 1 bis 8, **dadurch gekennzeichnet, dass** an dem Vorrichtungsgehäuse (8) eine Ausnehmung (30) vorgesehen ist und dass die Datenanzeigeeinrichtung (17) des Sicherheitsmoduls (10) der Ausnehmung (30) derart zugeordnet ist, dass die Datenanzeigeeinrichtung (17) von außen durch die Ausnehmung (30) des Vorrichtungsgehäuses (8) hindurch einsehbar ist.

10. Ladestation (1) nach einem der Ansprüche 1 bis 9, **dadurch gekennzeichnet, dass** die zweite Datenleitungsschnittstelle (15) ausgebildet ist zur rückwirkungsfreien bidirektionalen Kommunikation von dem Sicherheitsmodul (10) zu der Zentralsteuereinheit (2) einerseits und von der Zentralsteuereinheit (2) zu dem Sicherheitsmodul (10) andererseits.

11. Ladestation (1) nach einem der Ansprüche 1 bis 10, **dadurch gekennzeichnet, dass** eine zusätzliche Datenleitung vorgesehen ist, welche von dem Energiezähler (3) zu der Zentralsteuereinheit (2) geführt ist und welche ausgebildet ist zur Übertragung des aktuellen Zählerstands von dem Energiezähler (3) and die Zentralsteuereinheit (2), und/oder dass die gesicherte Datenleitung (14) und/oder die Steuerungsleitung (16) und/oder die zusätzliche Datenleitung als Bussystem und/oder als ein Teil eines Bussystems ausgebildet sind.

12. Betriebsverfahren für eine zur Bereitstellung elektrischer Energie für ein elektrisch betreibbares Fahrzeug (23) ausgebildete Ladestation (1) nach einem der Ansprüche 1 bis 11, umfassend die folgenden Schritte:
- es wird ein Startsignal als Betätigungssignal (25) für einen Ladevorgang empfangen und an eine Zentralsteuereinheit (2) der Ladestation (1) geleitet;
- von der Zentralsteuereinheit (2) wird anlässlich des Empfangs des Startsignals ein Schaltelement (4) betätigt zum Aktivieren des Ladevorgangs;
- von der Zentralsteuereinheit (2) wird anlässlich des Empfangs des Startsignals ein erstes Triggersignal erzeugt und rückwirkungsfrei über eine Steuerungsleitung (16) und eine zweite Datenleitungsschnittstelle (15) an einen Sicherheitsprozessor (11) eines Sicherheitsmoduls (10) der Ladestation (1) gesendet;
- über eine Ladeleitung (5) der Ladestation (1) wird nach dem Aktivieren an einem Steckelement (6) der Ladestation (1) die elektrische Energie bereitgestellt;
- mittels eines geeichten Energiezählers (3) wird eine über die Ladeleitung (5) insgesamt bereitgestellte Energiemenge erfasst;
- ein aktueller Zählerstand des Energiezählers (3) wird über eine gesicherte Datenleitung (14) und eine erste Datenleitungsschnittstelle (13) von dem Energiezähler (3) an den Sicherheitsprozessor (11) des Sicherheitsmoduls (10) übertragen;
- von dem Sicherheitsprozessor (11) des Sicherheitsmoduls (10) wird beim Empfang des ersten Triggersignals der aktuelle Zählerstand des Energiezählers (3) als Anfangsenergiemenge in einen Sicherheitsdatenspeicher (12) des Sicherheitsmoduls (10) geschrieben;
- zur Beendigung des Ladevorgangs wird ein Stoppsignal als Betätigungssignal (25) empfangen und an die Zentralsteuereinheit (2) der Ladestation (1) geleitet;
- von der Zentralsteuereinheit (2) wird anlässlich des Empfangs des Stoppsignals das Schaltelement (4) betätigt zum Deaktivieren des Ladevorgangs;
- von der Zentralsteuereinheit (2) wird anlässlich des Empfangs des Stoppsignals ein zweites Triggersignal erzeugt und rückwirkungsfrei über die Steuerungsleitung (16) an den Sicherheitsprozessor (11) des Sicherheitsmoduls (10) übertragen;
- von dem Sicherheitsprozessor (11) wird beim Empfang des zweiten Triggersignals der aktuelle Zählerstand des Energiezählers (3) als Endenergiemenge in den Sicherheitsdatenspeicher (12) des Sicherheitsmoduls (10) geschrieben.

13. Betriebsverfahren nach Anspruch 12, **dadurch gekennzeichnet, dass** mit dem Betätigungssignal (25) eine zur Identifizierung eines Rechnungsempfängers dienende ID empfangen wird und die ID von der Zentralsteuereinheit (2) an den Sicherheitsprozessor (11) des Sicherheitsmoduls (10) gesendet wird, wobei der Sicherheitsprozessor (11) die ID zusammen mit der Anfangsenergiemenge und der Endenergiemenge in den Sicherheitsdatenspeicher (12) des Sicherheitsmoduls (10) schreibt.

14. Betriebsverfahren nach Anspruch 12 oder 13, **dadurch gekennzeichnet, dass** von der Zentralsteuereinheit (2) beim Erzeugen des ersten Triggersignals und/oder von dem Sicherheitsprozessor (11) des Sichermoduls (10) beim Empfang des ersten Triggersignals das aktuelle Datum und die Uhrzeit ermittelt werden und in den Sicherheitsdatenspeicher (12) des Sicherheitsmoduls (10) geschrieben werden.

15. Betriebsverfahren nach einem der Ansprüche 12 bis 14, **dadurch gekennzeichnet, dass** von der Zentralsteuereinheit (2) beim Erzeugen des ersten Triggersignals und/oder von dem Sicherheitsprozessor (11) des Sicherheitsmoduls (10) beim Empfang des ersten Triggersignals eine Zeitmessung gestartet wird und dass von der Zentralsteuereinheit (2) beim Erzeugen des zweiten Triggersignals und/oder von dem Sicherheitsprozessor (11) des Sicherheitsmoduls (10) beim Empfang des zweiten Triggersignals die Zeitmessung gestoppt wird und dass eine im Rahmen der Zeitmessung bestimmte Ladedauer in den Sicherheitsdatenspeicher (12) des Sicherheitsmoduls (10) geschrieben wird.

16. Betriebsverfahren nach einem der Ansprüche 12 bis 15, **dadurch gekennzeichnet, dass**
- der aktuelle Zählerstand von dem Energiezähler (3) exklusiv über die gesicherte Datenleitung (14) an den Sicherheitsprozessor (11) des Sicherheitsmoduls (10) übertragen wird, und/oder
- die Übertragung des aktuellen Zählerstands an die Zentralsteuereinheit (2) mittelbar über das Sicherheitsmodul (10) erfolgt, und/oder
- der aktuelle Zählerstand des Energiezählers (3) über die gesicherte Datenleitung (14) an das Sicherheitsmodul (10) und zusätzlich über eine von dem Energiezähler (3) zu der Zentralsteuereinheit (2) geführte zusätzliche Datenleitung übertragen wird.

17. Betriebsverfahren nach einem der Ansprüche 12 bis 16, **dadurch gekennzeichnet, dass** zur Überprüfung einer dem Rechnungsempfänger in Rechnung gestellten Energiemenge über eine Eingabeeinrichtung (18) die auf einer Rechnung ausgewiesene Anfangsenergiemenge und/oder die auf der Rechnung ausgewiesene, der Anfangsenergiemenge zugeordnete Endenergiemenge und/oder das Datum und die Uhrzeit, zu dem der Ladevorgang gestartet wurde, und/oder die Dauer des Ladevorgangs und/oder das Datum und die Uhrzeit, zu dem der Ladevorgang beendet wurde, als ein Prüfsignal (21) eingegeben und von dem Sicherheitsprozessor (11) mit den in dem Sicherheitsdatenspeicher (12) gespeicherten Anfangsenergiemengen und Endenergiemengen, Datums- und Zeitangaben verglichen werden und dass bei einer Übereinstimmung der eingegebenen Werte und gespeicherten Werte für die Energiemengen und/oder das Datum und die Uhrzeit eine positive Prüfrückmeldung gegeben wird.

18. Betriebsverfahren nach einem der Ansprüche 12 bis 17, **dadurch gekennzeichnet, dass** die Zentralsteuereinheit (2) während des Ladevorgangs mittelbar von dem Sicherheitsmodul (10) und/oder unmittelbar von dem Energiezähler (3) regelmäßig den aktuellen Zählerstand und/oder die aktuelle Spannung und/oder die aktuelle Leistung und/oder den aktuellen Strom empfängt.

19. Betriebsverfahren nach einem der Ansprüche 12 bis 18, **dadurch gekennzeichnet, dass** von der Zentralsteuereinheit (2) ein Auslesesignal rückwirkungsfrei an das Sicherheitsmodul (10) gesendet wird, dass der Sicherheitsdatenspeicher (12) dann ausgelesen wird und dass alle oder einzelne in dem Sicherheitsdatenspeicher (12) gespeicherten Anfangsenergiemengen und/oder Endenergiemengen und/oder ID und/oder Datums- und Uhrzeitangaben und/oder Ladedauerangaben über die Steuerungsleitung (16) an die Zentralsteuereinheit (2) übertragen werden.

## Claims

1. Charging station (1) for supplying electrical energy for an electrically operable vehicle (23), comprising a device housing (8), comprising a plug element (6) directly or indirectly connectable to a counter plug element assigned to the vehicle (23), comprising a charging line (5) which leads to the plug element (6) and via which the electrical energy is supplied, comprising a switching element (4) assigned to the charging station (1) for activating and/or deactivating the charging process, comprising an energy meter (3) for the electrical energy supplied via the charging line (5), comprising a central control unit (2) operatively connected to the switching element (2) and having a central processor, and comprising an actuation means, the actuation means being configured to receive an actuation signal (25), the central control unit (2) being configured to switch the switching element (4) in such a way that the charging process is activated and/or deactivated as a function of the actuation signal (25), the energy meter (3) being configured as a gauged energy meter (3) and a security module (10) being provided in the device housing (8), **characterised in that** the security module (10) provides a separate security housing (19), a security data store (12) arranged in the security housing (19), a security processor (11) arranged in the security housing (19), a data display means (17) assigned to the security housing (19), a first data line interface (13) assigned to the security housing (19), and a second data line interface (15) assigned to the security housing (19), as well as an input means (18) configured to receive a test signal (21) to be passed on to the security processor (11), the first data line interface (13) of the security module (10) being connected to the energy meter (3) via a secured data line (14) and serving to receive a present meter state of the energy meter (3), the second data line interface (15) of the security module (10) being connected to the central control unit (2) via a control line (16) and the connection of the security module (10) to the central control unit (2) being configured to be free from feedback effects.

2. Charging station according to claim 1, **characterised in that** a housing of the energy meter (3) and the security housing (19) of the security module (10) are fitted to one another and/or **in that** the energy meter (3) and the security module (10) are provided physically integrated into the security housing (19).

3. Charging station (1) according to either claim 1 or claim 2, **characterised in that** the secured data line (14) is configured mechanically secured and/or tamper-evident and/or **in that** the secured data line (14) is electrically secured by configuring it to transmit signed and/or encrypted data.

4. Charging station (1) according to any of claims 1 to 3, **characterised in that** the secured data line (14) and the first data line interface (13) are configured for bidirectional transmission of data both from the energy meter to the security module (10) and from the security module (10) to the energy meter (3).

5. Charging station (1) according to any of claims 1 to 4, **characterised in that** the security housing (19) and/or the housing of the energy meter (3) are configured mechanically secured and/or tamper-evident so as to protect against and/or provide evidence of access to the functional components of the security module (10) and/or energy meter (3) which are provided in the housings (19).

6. Charging station (1) according to any of claims 1 to 5, **characterised in that** the input means (18) is configured as part of the security module (10) and/or arranged in the security housing (19).

7. Charging station (1) according to any of claims 1 to 6, **characterised in that** the input means (18) provides at least two input buttons, the at least two input buttons of the input device (18) preferably being provided as capacitively operating input buttons.

8. Charging station (1) according to any of claims 1 to 7, **characterised in that** the input device (18) is arranged in the device housing (8) and/or in the security housing (19) in such a way as to be actuable from the outside.

9. Charging station (1) according to any of claims 1 to 8, **characterised in that** a clearance (30) is provided in the device housing (8) and **in that** the data display means (17) of the security module (10) is assigned to the clearance (30) in such a way that the data display means (17) is viewable from the outside through the clearance (30) in the device housing (8).

10. Charging station (1) according to any of claims 1 to 9, **characterised in that** the second data line interface (15) is configured for bidirectional communication free from feedback effects, both from the security module (10) to the central control unit (2) and from the central control unit (2) to the security module (10).

11. Charging station (1) according to any of claims 1 to 10, **characterised in that** an additional data line is provided, which leads from the energy meter (3) to the central control unit (2) and is configured to transmit the present meter state from the energy meter (3) to the central control unit (2), and/or **in that** the secured data line (14) and/or the control line (16) and/or the additional data line are configured as a bus system and/or as part of a bus system.

12. Operating method for a charging station (1) according to any of claims 1 to 11 which is configured to supply electrical energy for an electrically operable vehicle (23), comprising the following steps:
- a start signal is received as an actuation signal (25) for a charging process and passed to a central control unit (2) of the charging station (1);
- upon receipt of the start signal, a switching element (4) is actuated by the central control unit (2) to activate the charging process;
- upon receipt of the start signal, a first trigger signal is generated by the central control unit (2) and sent, without any feedback effects, to a security processor (11) of a security module (10) of the charging station (1) via a control line (16) and a second data line interface (15);
- after the activation, the electrical energy is provided at a plug element (6) of the charging station (1) via a charging line (5) of the charging station (1);
- a total amount of energy provided via the charging line (5) is detected using a gauged energy meter (3);
- a present meter state of the energy meter (3) is transmitted from the energy meter (3) to the security processor (11) of the security module (10) via a secured data line (14) and a first data line interface (13);
- upon receipt of the first trigger signal, the present meter state of the energy meter (3) is written to a security data store (12) of the security module (10) as an initial energy amount by the security processor (11) of the security module (10);
- to terminate the charging process, a stop signal is received as an actuation signal (25) and passed to the central control unit (2) of the charging station (1);
- upon receipt of the stop signal, the switching element (4) is actuated by the central control unit (2) to deactivate the charging process;
- upon receipt of the stop signal, a second trigger signal is generated by the central control unit (2) and transmitted, without any feedback effects, to the security processor (11) of the security module (10) via the control line (16);
- upon receipt of the second trigger signal, the present meter state of the energy meter (3) is written to the security data store (12) of the security module (10) as a final energy amount by the security processor (11).

13. Operating method according to claim 12, **characterised in that**, along with the actuation signal (25), an ID for identifying an invoice recipient is received, and the ID is sent from the central control unit (2) to the security processor (11) of the security module (10), the security processor (11) writing the ID to the security data store (12) of the security module (10) together with the initial energy amount and final energy amount.

14. Operating method according to either claim 12 or claim 13, **characterised in that** the present date and time are determined and written to the security data store (12) of the security module (10), by the central control unit (2) upon generation of the first trigger signal and/or by the security processor (11) of the security module (10) upon receipt of the first trigger signal.

15. Operating method according to any of claims 12 to 14, **characterised in that** a time measurement is started, by the central control unit (2) upon generation of the first trigger signal and/or by the security processor (11) of the security module (10) upon receipt of the first trigger signal, and **in that** the time measurement is stopped, by the central control unit (2) upon generation of the second trigger signal and/or by the security processor (11) of the security module (10) upon receipt of the second trigger signal, and **in that** a charging duration determined in the context of the time measurement is written to the security data store (12) of the security module (10).

16. Operating method according to any of claims 12 to 15, **characterised in that**
- the present meter state is transmitted from the energy meter (3) to the security processor (11) of the security module (10) exclusively via the secured data line (14), and/or
- the present meter state is transmitted to the central control unit (2) directly via the security module (10), and/or
- the present meter state of the energy meter (3) is transmitted to the security module (10) via the secured data line (14) and additionally via an additional data line, leading from the energy meter (3) to the central control unit (2).

17. Operating method according to any of claims 12 to 16, **characterised in that**, to check an energy amount invoiced to the invoice recipient, the initial energy amount shown on an invoice and/or the final energy amount assigned to the initial energy amount and shown on the invoice and/or the date and time at which the charging process was started and/or the duration of the charging process and/or the date and time at which the charging process was ended are inputted via an input means (18) as a check signal (21) and compared by the security processor (11) with the initial energy amounts and final energy amounts and date and time specifications stored in the security data store (12), and **in that** a positive check report is given if the inputted and stored values for the energy amounts and/or the date and time match.

18. Operating method according to any of claims 12 to 17, **characterised in that**, during the charging process, the central control unit (2) regularly receives the present meter state and/or present voltage and/or present power and/or present current directly from the security module (10) and/or indirectly from the energy meter (3).

19. Operating method according to any of claims 12 to 18, **characterised in that** a readout signal is sent from the central control unit (2) to the security module (10), without any feedback, **in that** the security data store (12) is subsequently read out, and **in that** some or all of the initial energy amounts and/or final energy amounts and/or IDs and/or date and time specifications and/or charging duration specifications stored in the security data store (12) are transmitted to the central control unit (2) via the control line (16).

## Revendications

1. Station de recharge (1) destinée à fournir de l'énergie électrique à un véhicule électriquement entraînable (23) comprenant un boîtier de dispositif (8), comprenant un élément de connecteur (6), lequel peut être raccordé directement ou indirectement à un élément de connecteur correspondant associé au véhicule (23), comprenant un câble de recharge (5) qui est amené vers l'élément de connecteur (6) et par le biais duquel l'énergie électrique est acheminée, comprenant un élément de commutation (4) associé à la station de recharge (1) pour activer et/ou désactiver l'opération de recharge, comprenant un compteur d'énergie (3) pour l'énergie électrique fournie par le biais du câble de recharge (5), comprenant une unité de commande centrale (2) qui est en liaison opérationnelle avec l'élément de commutation (4) et comporte un processeur central et comprenant un moyen d'actionnement, dans lequel le moyen d'actionnement est conçu pour réceptionner un signal d'actionnement (25), dans lequel l'unité de commande centrale (2) est conçue pour commuter l'élément de commutation (4) de telle sorte que l'operâtion de recharge soit activée et/ou désactivée en fonction du signal d'actionnement (25), dans lequel le compteur d'énergie (3) est conçu sous la forme d'un compteur d'énergie (3) étalonné et dans lequel un module de sécurité (10) est prévu dans le boîtier de dispositif (8), **caractérisé en ce que** le module de sécurité (10) prévoit un boîtier de sécurité séparé (19), une mémoire de données de sécurité (12) disposée dans le boîtier de sécurité (19), un processeur de sécurité (11) disposé dans le boîtier de sécurité (19), un moyen d'affichage de données (17) associé au boîtier de sécurité (19), une première interface de liaison de données (13) associée au boîtier de sécurité (19) et une seconde interface de liaison de données (15) associée au boîtier de sécurité (19) ainsi qu'un moyen d'entrée (18) conçu pour réceptionner un signal de contrôle (21) à transférer au processeur de sécurité (11), dans lequel la première interface de liaison de données (13) du module de sécurité (10) est reliée au compteur d'énergie (3) par le biais d'une liaison de données sécurisée (14) et sert à recevoir un relevé de compteur actuel du compteur d'énergie (3), dans lequel la seconde interface de liaison de données (15) du module de sécurité (10) est reliée à l'unité de commande centrale (2) par le biais d'une liaison de commande (16) et dans lequel la liaison du module de sécurité (10) avec l'unité de commande centrale (2) est conçue sans effet rétroactif.

2. Station de recharge selon la revendication 1, **caractérisée en ce qu'**un boîtier du compteur d'énergie (3) et le boîtier de sécurité (19) du module de sécurité (10) sont rapportés l'un à l'autre et/ou **en ce que** le compteur d'énergie (3) et le module de sécurité (10) sont prévus intégrés spatialement dans le boîtier de sécurité (19).

3. Station de recharge (1) selon la revendication 1 ou 2, **caractérisée en ce que** la liaison de données sécurisée (14) est conçue sécurisée mécaniquement et/ou plombée et/ou **en ce que** la liaison de données sécurisée (14) est sécurisée électriquement en étant conçue pour transférer des données signées et/ou codées.

4. Station de recharge (1) selon une des revendications 1 à 3, **caractérisée en ce que** la liaison de données sécurisée (14) et la première interface de liaison de données (13) sont conçues pour transférer de manière bidirectionnelle des données depuis le compteur d'énergie (3) jusqu'au module de sécurité (10) d'une part et depuis le module de sécurité (10) jusqu'au compteur d'énergie (3) d'autre part.

5. Station de recharge (1) selon une des revendications 1 à 4, **caractérisée en ce que** le boîtier de sécurité (19) et/ou le boîtier du compteur d'énergie (3) sont conçus sécurisés mécaniquement et/ou plombés pour se protéger contre et/ou pour détecter tout accès aux composants fonctionnels du module de sécurité (10) et/ou du compteur d'énergie (3) qui sont prévus dans les boîtiers (19).

6. Station de recharge (1) selon une des revendications 1 à 5, **caractérisée en ce que** le moyen d'entrée (18) est conçu come une partie du module de sécurité (10) et/ou est disposé dans le boîtier de sécurité (19).

7. Station de recharge (1) selon une des revendications 1 à 6, **caractérisée en ce que** le moyen d'entrée (18) prévoit au moins deux touches d'entrée, dans lequel les au moins deux touches d'entrée du moyen d'entrée (18) sont de préférence conçues sous la forme de touches d'entrée effectives de manière capacitive.

8. Station de recharge (1) selon une des revendications 1 à 7, **caractérisée en ce que** le moyen d'entrée (18) est disposé dans le boîtier de dispositif (8) et/ou le boîtier de sécurité (19) de manière à pouvoir être manipulé de l'extérieur.

9. Station de recharge (1) selon une des revendications 1 à 8, **caractérisée en ce qu'**un évidement (30) est prévu sur le boîtier de dispositif (8) et **en ce que** le moyen d'affichage de données (17) du module de sécurité (10) est associé à l'évidement (30) de telle sorte que le moyen d'affichage de données (17) puisse être visible de l'extérieur à travers l'évidement (30) du boîtier de dispositif (8).

10. Station de recharge (1) selon une des revendications 1 à 9, **caractérisée en ce que** la seconde interface de liaison de données (15) est conçue pour une communication bidirectionnelle sans effet rétroactif depuis le module de sécurité (10) vers l'unité de commande centrale (2) d'une part et depuis l'unité de commande centrale (2) vers le module de sécurité (10) d'autre part,

11. Station de recharge (1) selon une des revendications 1 à 10, **caractérisée en ce qu'**une liaison de données supplémentaire est prévue, laquelle est amenée depuis le compteur d'énergie (3) vers l'unité de commande centrale (2) et conçue pour transférer le relevé de compteur actuel du compteur d'énergie (3) vers l'unité de commande centrale (2), et/ou **en ce que** la liaison de données sécurisée (14) et/ou la liaison de commande (16) et/ou la liaison de données supplémentaire sont conçues sous la forme d'un système de bus et/ou sous la forme d'une partie d'un système de bus.

12. Procédé de fonctionnement pour une station de recharge (1) conçue pour fournir de l'énergie électrique à un véhicule électriquement entraînable (23) selon une des revendications 1 à 11, comprenant les étapes suivantes :
- un signal de départ est reçu sous la forme d'un signal d'actionnement (25) d'une opération de recharge et guidé vers une unité de commande centrale (2) de la station de recharge (1) ;
- un élément de commutation (4) est actionné par l'unité de commande centrale (2) lors de la réception du signal de départ pour activer l'operàtion de recharge ;
- un premier signal de déclenchement est généré par l'unité de commande centrale (2) lors de la réception du signal de départ et envoyé sans effet rétroactif à un processeur de sécurité (11) d'un module de sécurité (10) de la station de recharge (1) par le biais d'une liaison de commande (16) et d'une seconde interface de liaison de données (15) ;
- après l'activation, de l'énergie électrique est fournie à un élément de connecteur (6) de la station de recharge (1) par le biais d'un câble de recharge (5) de la station de recharge (1) ;
- une quantité totale d'énergie fournie par le biais du câble de recharge (5) est enregistrée à l'aide d'un compteur d'énergie étalonné (3) ;
- un relevé de compteur actuel du compteur d'énergie (3) est transféré depuis le compteur d'énergie (3) jusqu'au processeur de sécurité (11) du module de sécurité (10) par le biais d'une liaison de données sécurisée (14) et d'une première interface de liaison de données (13) ;
- lors de la réception du premier signal de déclenchement, le relevé de compteur actuel du compteur d'énergie (3) est enregistré par le processeur de sécurité (11) du module de sécurité (10) dans une mémoire de données de sécurité (12) du module de sécurité (10) sous la forme d'une quantité d'énergie de départ ;
- pour terminer l'operàtion de recharge, un signal d'arrêt est reçu sous la forme d'un signal d'actionnement (25) et guidé vers l'unité de commande centrale (2) de la station de recharge (1) ;
- l'élément de commutation (4) est actionné par l'unité de commande centrale (2) lors de la réception du signal d'arrêt pour désactiver l'operàtion de recharge ;
- un second signal de déclenchement est généré par l'unité de commande centrale (2) lors de la réception du signal d'arrêt et transféré sans effet rétroactif au processeur de sécurité (11) du module de sécurité (10) par le biais de la liaison de commande (16) ;
- lors de la réception du second signal de déclenchement, le relevé de compteur actuel du compteur d'énergie (3) est enregistré par le processeur de sécurité (11) dans la mémoire de données de sécurité (12) du module de sécurité (10) sous la forme d'une quantité d'énergie finale.

13. Procédé de fonctionnement selon la revendication 12, **caractérisé en ce que**, avec le signal d'actionnement (25), une identification (ID) servant à l'identification d'un destinataire de facturation est reçue et l'ID est envoyée par l'unité de commande centrale (2) au processeur de sécurité (11) du module de sécurité (10), dans lequel le processeur de sécurité (11) enregistre l'ID conjointement avec la quantité d'énergie de départ et la quantité d'énergie finale dans la mémoire de données de sécurité (12) du module de sécurité (10).

14. Procédé de fonctionnement selon la revendication 12 ou 13, **caractérisé en ce que** la date actuelle et l'heure sont déterminées par l'unité de commande centrale (2) lors de la génération du premier signal de déclenchement et/ou par le processeur de sécurité (11) du module de sécurité (10) lors de la réception du premier signal de déclenchement et sont enregistrées dans la mémoire de données de sécurité (12) du module de sécurité (10).

15. Procédé de fonctionnement selon une des revendications 12 à 14, **caractérisé en ce qu'**un chronométrage est démarré par l'unité de commande centrale (2) lors de la génération du premier signal de déclenchement et/ou par le processeur de sécurité (11) du module de sécurité (10) lors de la réception du premier signal de déclenchement et **en ce que** le chronométrage est arrêté par l'unité de commande centrale (2) lors de la génération du second signal de déclenchement et/ou par le processeur de sécurité (11) du module de sécurité (10) lors de la réception du second signal de déclenchement et **en ce qu'**une durée de charge définie dans le cadre du chronométrage est enregistrée dans la mémoire de données de sécurité (12) du module de sécurité (10).

16. Procédé de fonctionnement selon une des revendications 12 à 15, **caractérisé en ce que**
- le relevé de compteur actuel du compteur d'énergie (3) est transféré exclusivement par le biais de la liaison de données sécurisée (14) au processeur de sécurité (11) du module de sécurité (10), et/ou
- le transfert du relevé de compteur actuel vers l'unité de commande centrale (2) s'effectue directement par le biais du module de sécurité (10), et/ou
- le relevé de compteur actuel du compteur d'énergie (3) est transféré au module de sécurité (10) par le biais de la liaison de données sécurisée (14) et en plus par le biais d'une liaison de données supplémentaire amenée depuis le compteur d'énergie (3) vers l'unité de commande centrale (2).

17. Procédé de fonctionnement selon une des revendications 12 à 16, **caractérisé en ce que**, pour vérifier une quantité d'énergie facturée à un destinataire de facturation, la quantité d'énergie de départ indiquée sur une facture et/ou la quantité d'énergie finale associée à la quantité d'énergie de départ et indiquée sur la facture et/ou la date et l'heure auxquelles l'operàtion de recharge a démarré, et/ou la durée de l'operàtion de recharge et/ou la date et l'heure auxquelles l'operàtion de recharge a terminé, sont entrées par le biais d'un moyen d'entrée (18) sous la forme d'un signal de contrôle (21) et sont comparées par le processeur de sécurité (11) aux quantités d'énergie de départ et quantités d'énergie finale, indications de date et d'heure qui sont mémorisées dans la mémoire de données de sécurité (12) et **en ce que**, en cas de concordance des valeurs entrées et des valeurs mémorisées pour les quantités d'énergie et/ou la date et l'heure, un signal de retour de contrôle positif est donné.

18. Procédé de fonctionnement selon une des revendications 12 à 17, **caractérisé en ce que** pendant l'operàtion de recharge l'unité de commande centrale (2) reçoit régulièrement le relevé de compteur actuel et/ou la tension actuelle et/ou la puissance actuelle et/ou le courant actuel, directement à partir du module de sécurité (10) et/ou indirectement à partir du compteur d'énergie (3).

19. Procédé de fonctionnement selon une des revendications 12 à 18, **caractérisé en ce qu'**un signal de lecture sans effet rétroactif est envoyé au module de sécurité (10) par l'unité de commande centrale (2), **en ce que** la mémoire de données de sécurité (12) est ensuite lue et **en ce que** toutes ou certaines des quantités d'énergie de départ et/ou quantités d'énergie finale et/ou identifications ID et/ou indications de date et d'heure et/ou indications de durée de charge qui sont mémorisées dans la mémoire de données de sécurité (12) sont transférées à l'unité de commande centrale (2) par le biais de la liaison de commande (16).
